# FASCICULE DE BREVET EUROPEEN

(11) **EP 2 476 158 B1**
(45) Date de publication et mention de la délivrance du brevet: **10.07.2013**
(21) Numéro de dépôt: 10762708.5
(22) Date de dépôt: 26.08.2010
(51) Int. Cl.: H01M 10/44, H01M 10/48

(54) **PROCÉDÉ D'UTILISATION D'UN SYSTÈME AUTONOME CONNECTÉ À UNE BATTERIE**
VERFAHREN ZUR VERWENDUNG EINES AN EINE BATTERIE ANGESCHLOSSENEN AUTONOMEN SYSTEMS
METHOD FOR USING A STAND-ALONE SYSTEM CONNECTED TO A BATTERY

(30) Priorité: 08.09.2009 FR 0904266
(43) Date de publication de la demande: 18.07.2012
(73) Titulaire: Commissariat à l'Énergie Atomique et aux Énergies Alternatives, 75015 Paris (FR); BUBENDORFF, 68220 Attenschwiller (FR)
(72) Inventeur: BRUN-BUISSON, David, F-38470 Vatilieu (FR); LABRUNIE, Antoine, F-75005 Paris (FR); PERICHON Pierre, F-38500 Voiron (FR)
(74) Mandataire: Talbot, Alexandre
(86) Numéro de dépôt international: PCT/FR2010/000582
(87) Numéro de publication internationale: WO 2011/030010

(56) Documents cités:
- FR-A1- 2 714 772

## Description

### Domaine technique de l'invention

L'invention est relative à un procédé d'utilisation d'un système autonome comportant un actionneur connecté à une batterie.

### État de la technique

Les économies d'énergie et les orientations vers les énergies renouvelables entraînent un développement de nouvelles manières d'utiliser les batteries, notamment au cours de leurs charges et de leurs décharges. Les systèmes de gestion de charges et de décharges actuels ne sont pas adaptés aux contraintes des énergies renouvelables.

Dans la plupart des systèmes autonomes existants, la décharge d'une batterie est contrôlée par un régulateur. L'objectif principal de ce régulateur est d'éviter une décharge profonde de la batterie, pouvant provoquer une dégradation physique irréversible de cette dernière.

Le brevet US4,952,862 décrit une méthode pour prédire en temps réel le temps d'utilisation restant d'une batterie. Cette méthode utilise des mesures à intervalles réguliers de la tension et de l'intensité du courant traversant la batterie pour déterminer le temps restant avant l'arrêt de cette dernière. Cette méthode permet d'informer un utilisateur de l'autonomie restante en temps en fonction de l'utilisation qu'il fait de la batterie. Ceci ne permet pas d'optimiser le temps de fonctionnement de la batterie.

Le document FR-2714772 décrit une batterie d'alimentation utilisée pour alimenter un dispositif. La batterie comporte une borne positive, une borne négative et une borne universelle. La borne universelle permet au dispositif de piloter la batterie.

### Objet de l'invention

L'objet de l'invention a pour but d'optimiser l'utilisation d'une batterie d'un système autonome à partir de ce système, tout en informant un utilisateur lorsque l'autonomie devient faible.

Ce but est atteint par les revendications annexées et notamment par le fait que lors d'une phase de décharge de la batterie, le procédé comporte au moins un mode de fonctionnement normal du système et un mode de fonctionnement dégradé du système, le procédé comportant les étapes suivantes :
- la mesure d'une température représentative de la température de la batterie,
- la détermination d'un premier seuil de tension fonction de la température mesurée,
- la mesure d'une tension aux bornes de la batterie,
- la détermination du mode de fonctionnement, ledit système autonome étant en mode de fonctionnement normal lorsque la tension mesurée est supérieure au premier seuil de tension, et en mode de fonctionnement dégradé lorsque la tension mesurée est inférieure audit premier seuil de tension, le courant fourni par la batterie lors d'un actionnement étant réduit lors du passage du mode normal au mode dégradé.

Selon un développement, la mesure de la tension aux bornes de la batterie est réalisée en dehors d'un actionnement de l'actionneur.

Selon un perfectionnement, le procédé comporte un mode de fonctionnement critique associé à un deuxième seuil de tension, en fonction de la température, et inférieur au premier seuil de tension, le système autonome étant en mode de fonctionnement dégradé lorsque la tension mesurée est comprise entre le premier de tension et le deuxième seuil de tension, et en mode critique lorsque la tension mesurée est inférieure au deuxième seuil de tension, le courant fourni par la batterie étant réduit lors du passage du mode dégradé au mode critique.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre en schéma blocs un système utilisé selon le procédé de l'invention.
La figure 2 illustre une table de correspondance entre une température et un premier seuil de tension.
La figure 3 illustre une courbe représentative du nombre d'actionnements possibles du système à une température de -10°C.
La figure 4 illustre une courbe représentative de l'évolution de la tension aux bornes de la batterie à une température de 0°C lors d'une succession d'actionnements du système.
La figure 5 illustre une courbe représentative de l'évolution de la tension aux bornes de la batterie à une température de 25°C lors d'une succession d'actionnements du système.
La figure 6 illustre une courbe représentative de l'évolution de la tension aux bornes de la batterie à une température de 55°C lors d'une succession d'actionnements du système.
La figure 7 illustre une courbe représentative du nombre d'actionnements en fonction de la température à courant constant.
La figure 8 illustre l'évolution de la tension aux bornes de la batterie en fonction du nombre d'actionnements sans gestion des modes de fonctionnement.
La figure 9 illustre l'évolution de la tension aux bornes de la batterie en fonction du nombre d'actionnements avec gestion des modes de fonctionnement selon l'invention.
La figure 10 illustre le nombre d'actionnements possibles d'une batterie en fonction du nombre d'années simulées pour deux valeurs de courant constant.
La figure 11 illustre la variation de la tension aux bornes de la batterie au cours du temps à une température de 25°C en mode normal.
La figure 12 illustre un diagramme de fonctionnement de la gestion de la décharge de la batterie.
La figure 13 illustre une hystérésis du changement de mode de fonctionnement.

### Description d'un mode préférentiel de l'invention

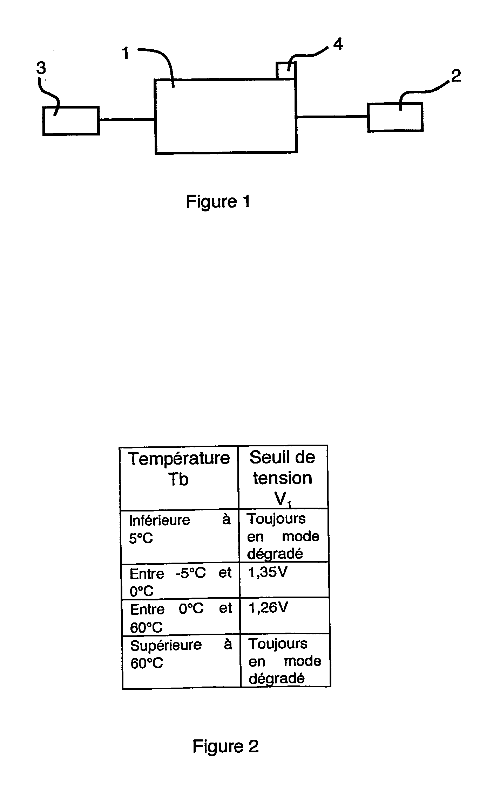

Un système autonome peut être décrit comme un système qui assure son administration de manière indépendante. Selon un exemple particulier de réalisation illustré à la figure 1, un système autonome peut comporter un actionneur 2, comme un moteur, connecté à une batterie 1 assurant son alimentation. La batterie 1 peut quant à elle être reliée à un générateur d'énergie renouvelable 3 pour permettre sa recharge.

Lors d'une phase de décharge de la batterie 1, le système autonome peut comporter au moins un mode de fonctionnement normal Mn et un mode de fonctionnement dégradé Md. De préférence, le courant est imposé par le système. Le courant fourni à l'actionneur par la batterie en mode normal Mn peut correspondre au courant nominal de la batterie. Le mode dégradé Md permet une meilleure autonomie du système autonome aux dépens de ses performances, pour cela l'intensité du courant débité par la batterie 1 est plus importante dans le mode normal Mn que dans le mode dégradé Md.

Le procédé comporte alors les étapes suivantes :
- la mesure d'une température T_{b} représentative de la température de la batterie 1,
- la détermination d'un premier seuil V₁ de tension fonction de la température mesurée T_{b},
- la mesure d'une tension V_{b} aux bornes de la batterie, de préférence, en dehors d'un actionnement de l'actionneur 2 pour que la tension V_{b} soit stabilisée,
- la détermination du mode de fonctionnement, ledit système autonome étant en mode de fonctionnement normal Mn lorsque la tension mesurée Vb est supérieure au premier seuil de tension V₁, et en mode de fonctionnement dégradé Md lorsque la tension mesurée Vb est inférieure audit premier seuil de tension V₁, le courant fourni par la batterie lors d'un actionnement étant réduit lors du passage du mode normal Mn au mode dégradé Md.

De préférence, la baisse de courant est significative de sorte à augmenter l'autonomie du système. A titre d'exemple, le courant fourni par la batterie lors d'un actionnement est réduit d'au moins 20% lors du passage du mode normal Mn au mode dégradé Md.

La mesure de la température T_{b} représentative de la batterie peut être réalisée par une sonde 4 de température placée dans la batterie ou à proximité de celle-ci.

La détermination du premier seuil V₁ de tension peut être réalisée à partir d'une table comportant pour une pluralité de valeurs de température, ou de plages de températures, des valeurs du premier seuil de tension V₁ associé. La table peut être établie à partir d'une batterie étalon pour un système autonome donné. Bien entendu, la personne du métier pourra adapter tout type de méthode permettant d'obtenir pour une température mesurée T_{b} de la batterie le premier seuil de tension V₁. Ce premier seuil de tension V₁ pourra être établi à partir de batteries étalon en fonction du nombre d'actionnements voulus dans chaque mode.

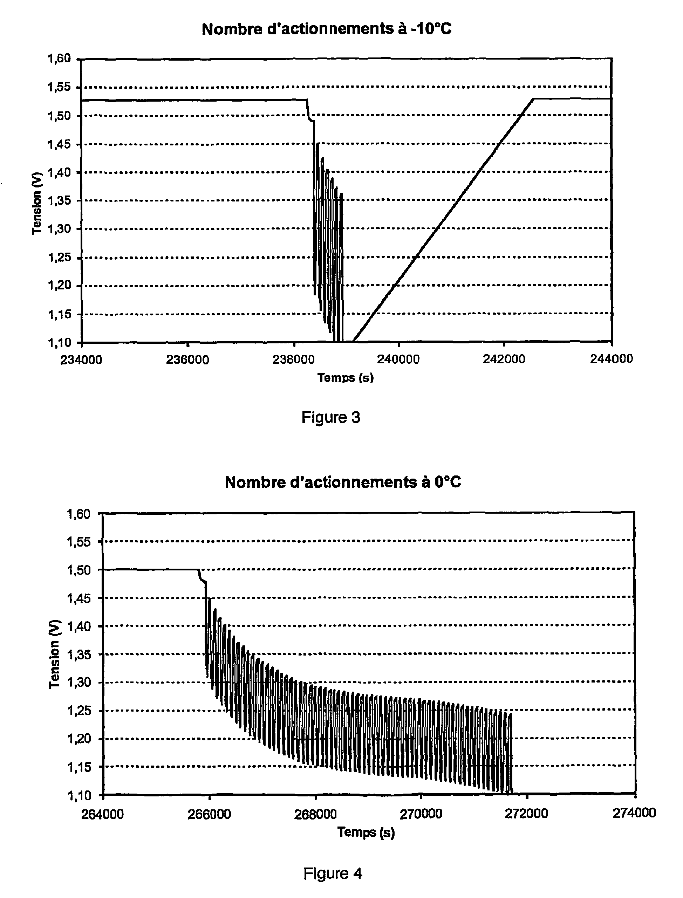

La mesure de la température de la batterie T_{b} permet de prendre en considération l'influence de la température sur le vieillissement prématuré de cette dernière. À basse température, l'impédance interne de la batterie augmente et la mobilité des porteurs diminue, ce qui diminue la tension de décharge à courant constant, et limite le courant total pouvant être fourni par la batterie. À l'inverse à haute température, les réactions parasites dégradantes sont favorisées. Autrement dit, le comportement des batteries en fonction de la température est très différent. Ce comportement est, par exemple, illustré aux figures 3 à 6. La figure 3 représente l'évolution de la tension aux bornes de la batterie dans le temps lorsqu'une succession d'actionnements d'un moteur est réalisée à une température de la batterie T_{b} de -10°C. Chaque pic de la courbe a une valeur haute correspondant à la valeur de la tension aux bornes de la batterie en dehors d'un actionnement et une valeur basse correspondant à la tension aux bornes de la batterie pendant l'actionnement. Un actionnement pour obtenir cette figure correspond à un courant constant de 2A pendant 30 secondes fourni par une batterie de type NiMh à base d'un accumulateur ayant une capacité de 2,1 Ah et une tension nominale de 1,2V. Lors d'un actionnement, si la tension aux bornes de la batterie atteint un seuil de tension de fonctionnement V_{f}, de 1,1 V pour les figures 3 à 6, la batterie est considérée comme totalement déchargée et cette dernière doit alors être rechargée. À la température de -10°C, la batterie permet seulement de réaliser six actionnements (nombre de pics) avant d'être considérée comme déchargée.

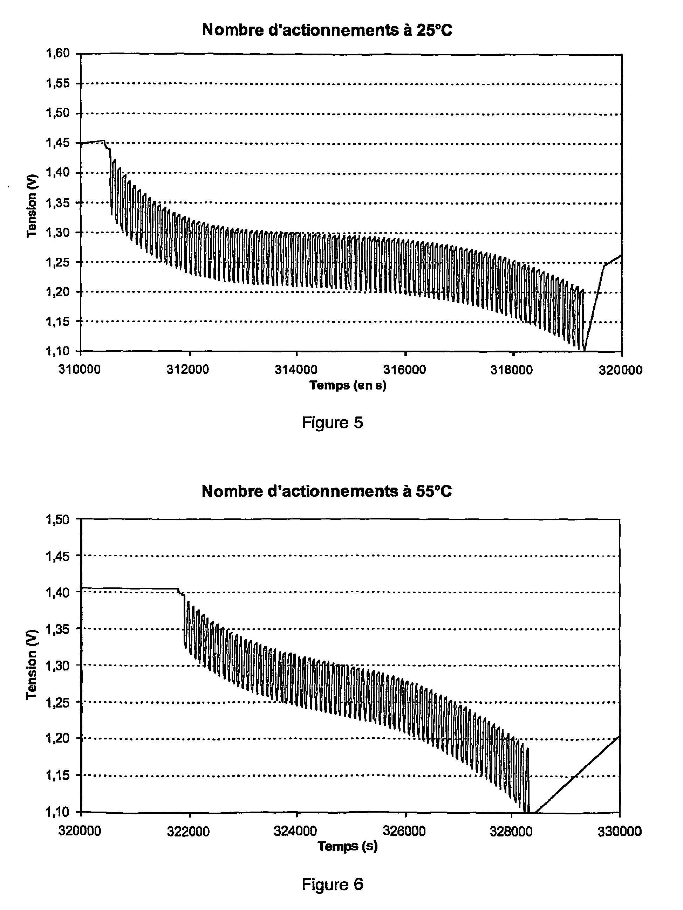

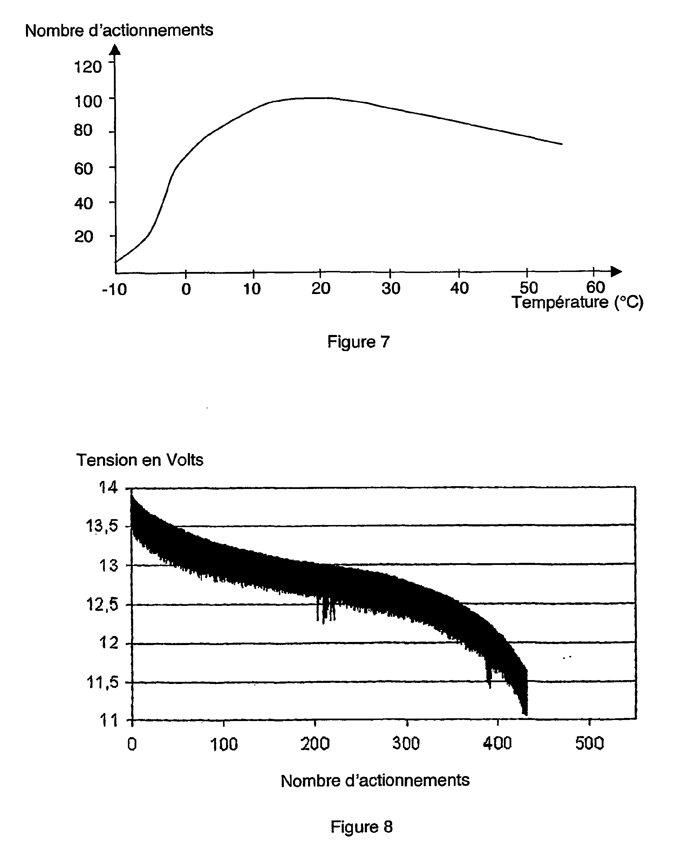

Les figures 4 à 6 représentent les mêmes courbes que la figure 3 mais pour des températures de la batterie respectivement égales à 0°C, 25°C et 55°C. Selon ces figures, il apparaît clairement que plus la température augmente, plus le nombre d'actionnements possibles avant une décharge totale de cette dernière augmente. En effet, il est possible de compter 64 actionnements à 0°C (figure 4) et 97 actionnements à 25°C (figure 5). II est aussi clairement visible que la tendance s'inverse lorsque la température de la batterie devient trop importante comme sur la figure 6, où l'on ne compte que 71 actionnements avant une décharge complète de la batterie. Ceci est confirmé par la synthèse des tests représentée à la figure 7 par l'évolution du nombre d'actionnements possibles de la batterie avant coupure en fonction de la température, la courbe est croissante de -10°C jusqu'à environ 20°C puis elle devient décroissante. Le premier seuil de tension V₁ utilisé pour déterminer le mode de fonctionnement du système autonome peut alors être déterminé en fonction de la température mesurée T_{b}.

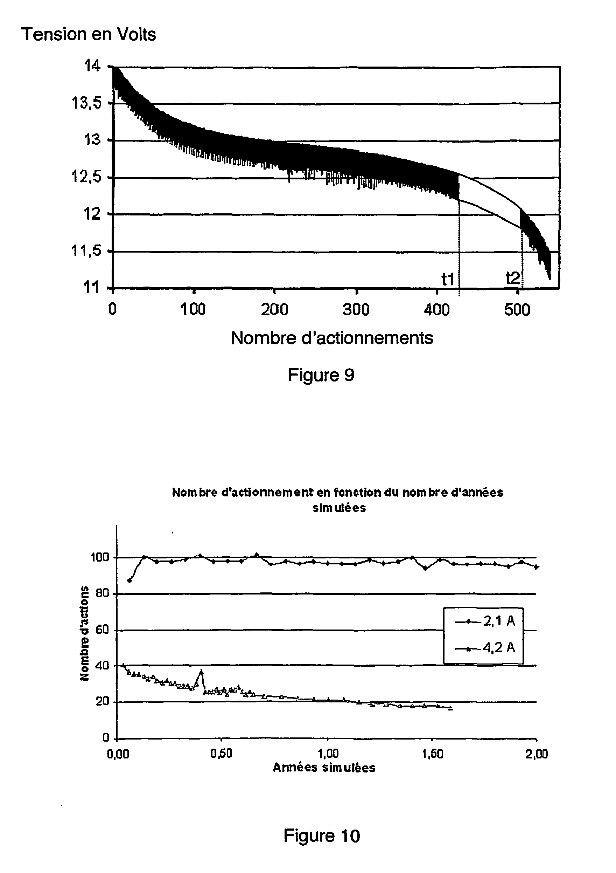

La diminution de l'intensité du courant devant être fourni par la batterie 1 permet une optimisation du nombre d'actionnements du moteur et donc de l'autonomie du système autonome. À titre d'exemple, on a réalisé une batterie comprenant 10 accumulateurs identiques à celui utilisé pour la définition des seuils. II est, de plus, connecté à un actionneur dont la consommation est différente de celle utilisée lors des tests. Ainsi, en mode normal Mn le courant débité par la batterie 1 peut être limité à un courant de 2A puis un courant de 1 A en mode dégradé. Cette optimisation est visible aux figures 8 et 9. La figure 8 représente l'évolution de la tension aux bornes de la batterie au cours du temps à 25°C pour une succession d'actionnements jusqu'à la décharge totale. La figure 9 représente la même chose à la différence près qu'à l'instant t1 il y a eu un changement de mode avec une baisse du courant traversant la batterie de 50% (passage de 2A à 1 A). En comparant les courbes de la figure 8 et de la figure 9, il apparaît clairement que l'autonomie du système d'autonome se voit améliorée.

Dès lors, le découpage du fonctionnement du système autonome en fonction de la température et de la tension mesurée permet un gain non négligeable de durée de fonctionnement. Ce gain est crucial dans le cadre des systèmes autonomes car ces derniers n'ont pas accès à une source de courant inépuisable. En effet, la recharge de la batterie dépend en général des énergies renouvelables comme, par exemple, des panneaux photovoltaïques, des éoliennes ou encore des turbines hydrauliques. Ces sources d'énergies sont variables et intermittentes, il n'est donc pas toujours possible d'assurer la charge de la batterie. Dès lors, il devient important de repousser au plus loin la coupure générale du système autonome pour augmenter les probabilités de recharge de la batterie 1. De plus, ce changement de mode permet d'indiquer à l'utilisateur que la batterie commence à être déchargée et qu'il faut modérer son utilisation. En effet, la variation du courant permet d'observer un changement de comportement du système autonome.

Afin de permettre une recharge de la batterie 1, le seuil de tension de fonctionnement V_{f} peut être supérieur à une valeur minimale de tension recommandée par le constructeur de la batterie. Bien entendu le seuil de tension de fonctionnement est inférieur au premier seuil V₁. Entre le seuil de tension de fonctionnement V_{f} et la valeur minimale constructeur, le système autonome assure uniquement la gestion de la recharge de la batterie, la capacité restante est donc réservée à un chargeur (non représenté) faisant l'interface entre la source d'énergie renouvelable 3 et la batterie 1.

De plus, la limitation de l'intensité du courant de la batterie 1 lors de ses phases de fonctionnement peut avoir des effets bénéfiques à long terme sur son autonomie. La figure 10 représente l'évolution du nombre d'actionnements d'une batterie, après recharge complète, en fonction des années simulées. La courbe du haut représente un nombre d'actionnements réalisés à 2,1 A et la courbe du bas un nombre d'actionnements réalisés à 4,2A. Tandis qu'au cours des années la courbe à 2,1A reste relativement constante au niveau du nombre d'actionnements, la courbe à 4,2A subit une décroissance constante. Cette décroissance est due à des réactions parasites dégradantes générées dans la batterie lorsque les décharges sont réalisées trop rapidement. Les réactions parasites dégradent la batterie en particulier en fin de décharge, le passage d'un mode normal Mn à un mode dégradé Md limitant le courant fourni par la batterie, cela permet de diminuer les dégradations physiques de cette dernière, et d'ainsi assurer une meilleure autonomie au cours des années d'utilisation. Autrement dit, la diminution du courant lors du passage du mode normal au mode dégradé permettra, en plus de l'augmentation de l'autonomie restante, d'améliorer la durée de vie de la batterie.

Selon un perfectionnement, le procédé comporte en outre un mode de fonctionnement critique Mc associé à un deuxième seuil de tension V₂, en fonction de la température T_{b} de la batterie, et inférieur au premier seuil de tension V₁. La table de la figure 2 peut alors pour une température donnée, ou une plage de températures donnée, avoir une entrée supplémentaire représentative du deuxième seuil de tension V₂. Ainsi, le système autonome se trouve en mode de fonctionnement dégradé Md lorsque la tension mesurée est comprise entre le premier de tension V₁ et le deuxième seuil de tension V₂, et en mode critique lorsque la tension mesurée est inférieure au deuxième seuil. De la même manière que lors du passage du mode normal Mn au mode dégradé Md, le courant fourni par la batterie est réduit lors du passage du mode dégradé Md au mode critique Mc de sorte à augmenter l'autonomie du système autonome. De préférence, cette réduction du courant est d'au moins 20%. Le passage au mode critique est illustré à l'instant t2 de la figure 9.

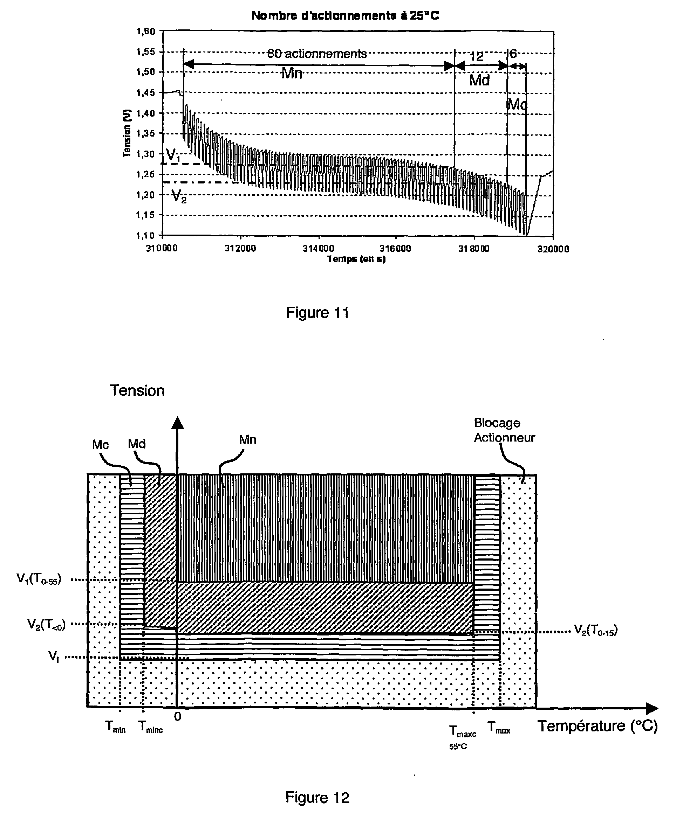

La figure 11 illustre le fonctionnement d'une batterie à une température de 25°C en mode normal. Cette courbe permet de déterminer les premier et deuxième seuils V₁, V₂. En mode normal, la batterie permet 98 actionnements. Afin de déterminer les seuils, on considère que le mode normal Mn requiert 80 actionnements, le mode dégradé Md 12 actionnements et le mode critique 6 actionnements. Sur la figure 11, le sommet d'un pic de tension est représentatif de la tension de la batterie au repos entre deux actionnements, c'est-à-dire en dehors d'un actionnement. Le premier seuil V₁ est alors mesuré en dehors d'un actionnement suite au quatre-vingtième actionnement et le deuxième seuil V₂ en dehors d'un actionnement suite au quatre-vingt-douzième actionnement. Ainsi, le premier seuil de tension V₁ est de 1,27V et le deuxième seuil de tension V₂ est de 1,22V. Par la suite, le passage d'un mode à un autre sera déterminé par la mesure, de préférence entre deux actionnements, de la tension V_{b} aux bornes de la batterie 1. Bien entendu, selon les applications, il est possible de déterminer les seuils en fonction du nombre d'actionnements souhaités dans chaque mode de fonctionnement.

Dans le cas où un deuxième seuil de tension V₂ est utilisé en combinaison avec le seuil de tension de fonctionnement V_{f}, ce dernier est inférieur au deuxième seuil de tension V₂ et supérieur à la valeur fournie par le constructeur. Ainsi, au-dessous dudit seuil de tension de fonctionnement V_{f}, le système autonome assure uniquement la gestion de la recharge de la batterie.

Selon une variante, le procédé comporte une valeur minimale de température Tₘᵢₙ en dessous de laquelle l'utilisation du système autonome est interdite

Selon une autre variante, pouvant être prise en combinaison avec la variante précédente, le procédé peut comporter une valeur maximale de température Tₘₐₓ au-dessus de laquelle l'utilisation du système autonome est interdite.

Un exemple particulier de la gestion du système prenant en compte le perfectionnement et les deux variantes intégrant des valeurs de température maximale Tₘₐₓ et minimale Tₘᵢₙ de fonctionnement peut être résumé par la figure 12. À la figure 12, la tension est représentée en fonction de la température, et les modes de fonctionnement normal Mn, dégradé Md et critique Mc sont représentés par des parties hachurées. En prenant en considération les différentes variantes et modes de réalisation, le système autonome n'est pas actif dès que la température est inférieure au seuil minimal de température Tₘᵢₙ, supérieure au seuil de température Tmax, ou si la tension mesurée V_{b} est inférieure au seuil de fonctionnement Vf. En dessous de 0°C, le système autonome n'est capable de fonctionner qu'en mode dégradé Md ou critique Mc. En effet, dans le mode normal Mn, la batterie serait trop rapidement déchargée (voir figure 3). En dessous de 0°C, si la tension de la batterie est supérieure au deuxième seuil de tension V₂(T<0) alors le mode de fonctionnement est le mode dégradé Md, sinon le système autonome fonctionne en mode critique Mc. Pour une température positive, le premier seuil de tension correspond à V₁(T₀₋₅₅) et le deuxième seuil de tension correspond à V₂(T_{0.55}).

Lorsque les conditions de température sont extrêmes, tant dans des températures positives que dans des températures négatives, il peut être possible de forcer le mode de fonctionnement en mode critique Mc au-dessous d'une température critique minimale T_{minc} supérieure à la température Tₘᵢₙ et au-dessus d'une température critique maximale T_{maxc} inférieure à la température Tₘₐₓ. À la figure 12, T_{maxc} est égal à 55°C.

Bien entendu, l'homme du métier pourra adapter les différents seuils en fonction de l'utilisation et du type de système autonome.

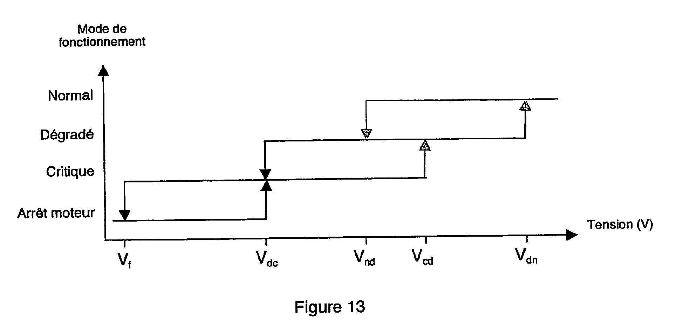

Comme expliqué précédemment, la température peut provoquer une variation de la tension. Ainsi, lorsque la batterie se retrouve dans un état proche d'un changement de mode, la variation de la température peut faire osciller la tension au-dessus et au-dessous du seuil associé au changement de mode. Ceci peut aussi se produire lors d'une fluctuation du courant ou d'une phase de relaxation de la batterie entre deux actionnements. Pour éviter que ce phénomène n'induise une instabilité dans la gestion du système et des changements trop fréquents de mode de fonctionnement, il est possible de définir une hystérésis dans les tensions de passage d'un mode à l'autre. Une telle hystérésis est illustrée à la figure 13. Ainsi, sur la figure 13, le passage du mode normal Mn au mode dégradé Md se fait à une tension mesurée V_{nd}, le passage du mode dégradé Md au mode normal Mn se fait à une tension V_{dn} supérieure à la tension V_{nd}. Le passage du mode dégradé Md au mode critique Mc se fait à une tension V_{dc} inférieure à la tension V_{nd} et le passage du mode critique Mc au mode dégradé Md se fait à une tension V_{cd} comprise entre les tensions V_{nd} et V_{dn}, ou entre les tensions V_{dc} et V_{nd}. L'actionneur du système autonome est bloqué si la tension atteint la tension V_{f} de fonctionnement minimal et débloqué si la tension redevient supérieure ou égale à la tension V_{dc}. Les valeurs de tension de l'hystérésis sont déterminées afin de garantir une stabilité suffisante dans les différents modes et donc un fonctionnement rassurant pour l'utilisateur.

Une hystérésis similaire peut être réalisée pour les changements effectués avec un seul seuil lorsque la température de la batterie est négative (seuls deux modes de fonctionnement étant autorisés).

La gestion du procédé peut être gérée par un contrôleur muni de mémoire et d'un processeur permettant de traiter les différentes données et de mettre en oeuvre les variantes et modes de réalisation du procédé.

Les lois de gestion du procédé décrites ci-dessus peuvent être appliquées à différents systèmes avec des objectifs différents.

Par exemple, lors d'un éclairage par un panneau de LEDs, le flux lumineux généré par les LEDs est proportionnel au courant qui les alimente. Si on souhaite indiquer à l'utilisateur que la batterie est presque déchargée, en diminuant l'intensité lumineuse de 20%, il faut diminuer le courant de 20%. Dans ce cas le passage du mode normal au mode dégradé se traduira par une diminution du courant de décharge de la batterie de 20%. Si cet éclairage est intégré à un PC portable, et que l'on souhaite avertir l'utilisateur de la faible charge de la batterie, diminuer l'intensité de l'éclairage de l'écran est potentiellement le meilleur moyen de l'avertir. Sur un PC haut de gamme, la puissance consommée par le système est de l'ordre de 250W, et la consommation liée à l'écran est de l'ordre de 25W. Une diminution de 20% de la puissance d'alimentation des LEDs se traduira donc au maximum par une baisse de 5W de la consommation liée à l'écran. Ces 5W ne représentent que 2% de la consommation du système global. Dans ce cas, un passage du mode normal au mode dégradé se traduira donc par une diminution du courant de décharge de la batterie de 2%. II est à noter que dans cet exemple il n'est probablement pas possible de diminuer la consommation du système de 20% sans empêcher son fonctionnement.

Dans le cas d'un volet de maison autonome, la principale attente concernant les différents modes est l'information de l'utilisateur. En effet, de par sa conception et la nature de ses pertes (frottements secs), la diminution de la puissance d'alimentation du moteur du volet ne diminue pas beaucoup l'énergie nécessaire à son déplacement. La définition du courant dans le mode dégradé est donc fonction d'un certain nombre de contraintes d'usage: il faut que le volet se déplace suffisamment lentement pour que l'utilisateur ait conscience du fait que la batterie fonctionne dans de mauvaises conditions, tout en maintenant un service satisfaisant. En pratique le temps peut être doublé ou triplé. Pour atteindre ce résultat, on peut diminuer la valeur du courant de commande de 20 à 40%.

Selon un dernier exemple concernant des batteries alimentant un véhicule électrique, on peut souhaiter baisser la consommation du système afin d'augmenter l'autonomie et permettre à l'utilisateur de rejoindre un poste de recharge. II ne sera cependant pas possible de diminuer la puissance fournie au moteur à volonté sans compromettre la sécurité de l'utilisateur (capacité d'accélération et vitesse maximale du véhicule, par exemple sur autoroute). La puissance minimale que l'on pourra fournir au système ne dépendra donc que du besoin physique du besoin (puissance nécessaire pour atteindre une vitesse minimale) indépendamment de sa puissance nominale. Ainsi pour rouler à *90km*/*h* (en considérant que cela représente la vitesse minimale pour rouler en sécurité sur autoroute) il faut une puissance de l'ordre de 15kW. Si la puissance nominale du véhicule est de 45kW, on peut donc diminuer le courant de 67% environ, mais si elle est de 30kW, on ne peut baisser que de 50%.

## Revendications

1. Procédé d'utilisation d'un système autonome comportant un actionneur (2) connecté à une batterie (1), **caractérisé en ce que** lors d'une phase de décharge de la batterie (1), le procédé comporte au moins un mode de fonctionnement normal (Mn) du système et un mode de fonctionnement dégradé (Md) du système, le procédé comportant les étapes suivantes :
- la mesure d'une température (Tb) représentative de la température de la batterie,
- la détermination d'un premier seuil de tension (V₁) fonction de la température mesurée (Tb),
- la mesure d'une tension (Vb) aux bornes de la batterie,
- la détermination du mode de fonctionnement (Mn, Md), ledit système autonome étant en mode de fonctionnement normal (Mn) lorsque la tension mesurée (Vb) est supérieure au premier seuil de tension (V₁), et en mode de fonctionnement dégradé (Md) lorsque la tension mesurée (Vb) est inférieure audit premier seuil de tension (V₁), le courant fourni par la batterie (1) lors d'un actionnement étant réduit lors du passage du mode normal (Mn) au mode dégradé (Md).

2. Procédé selon la revendication 1, **caractérisé en ce que** la mesure de la tension (Vb) aux bornes de la batterie (1) est réalisée en dehors d'un actionnement de l'actionneur (2).

3. Procédé selon l'une des revendications 1 et 2, **caractérisé en ce qu'**il comporte un mode de fonctionnement critique (Mc) associé à un deuxième seuil de tension (V₂), en fonction de la température, et inférieur au premier seuil de tension (V₁), le système autonome étant en mode de fonctionnement dégradé (Md) lorsque la tension mesurée (Vb) est comprise entre le premier seuil de tension (V₁) et le deuxième seuil de tension (V₂, et en mode critique (Mc) lorsque la tension mesurée (Vb) est inférieure au deuxième seuil de tension (V₂, le courant fourni par la batterie (1) étant réduit lors du passage du mode dégradé (Md) au mode critique (Mc).

4. Procédé selon la revendication 2, **caractérisé en ce qu'**il comporte un seuil de tension de fonctionnement (Vf), supérieur à une valeur fournie par le constructeur de la batterie, et inférieur au premier seuil de tension (V₁), au-dessous dudit seuil de tension de fonctionnement (Vf) le système autonome assure uniquement la gestion de la recharge de la batterie (1).

5. Procédé selon la revendication 3, **caractérisé en ce qu'**il comporte un seuil de tension de fonctionnement (Vf), supérieur à une valeur fournie par le constructeur de la batterie, et inférieur au deuxième seuil de tension (V₂), au-dessous dudit seuil de tension de fonctionnement (Vf) le système autonome assure uniquement la gestion de la recharge de la batterie (1).

6. Procédé selon l'une quelconque des revendications 1 à 5, **caractérisé en ce qu'**il comporte une valeur minimale de température (Tmin) en dessous de laquelle l'utilisation du système autonome est interdite

7. Procédé selon l'une quelconque des revendications 1 à 6, **caractérisé en ce qu'**il comporte une valeur maximale de température (Tmax) au-dessus de laquelle l'utilisation du système autonome est interdite.

## Patentansprüche

1. Verfahren zur Verwendung eines autonomen Systems mit einem an eine Batterie (1) angeschlossenen Stellglied (2), **dadurch gekennzeichnet, dass** während einer Entladungsphase der Batterie (1) das Verfahren mindestens eine normale Betriebsart (Mn) des Systems und eine verminderte Betriebsart (Md) des Systems umfasst, wobei das Verfahren folgende Schritte aufweist:
- Messen einer Temperatur (Tb), die die Temperatur der Batterie anzeigt,
- Bestimmen einer ersten Spannungsschwelle (V₁) in Abhängigkeit der gemessenen Temperatur (Tb),
- Messen einer Spannung (Vb) an den Batterieklemmen,
- Bestimmen der Betriebsart (Mn, Md), wobei sich das autonome System in der normalen Betriebsart (Mn) befindet, wenn die gemessene Spannung (Vb) über der ersten Spannungsschwelle (V₁) liegt, und in der verminderten Betriebsart (Md), wenn die gemessene Spannung (Vb) unter dieser ersten Spannungsschwelle (V₁) liegt, wobei der von der Batterie (1) gelieferte Strom während einer Betätigung beim Übergang von der normalen Betriebsart (Mn) in die verminderte Betriebsart (Md) verringert wird.

2. Verfahren gemäß Anspruch 1, **dadurch gekennzeichnet, dass** die Messung der Spannung (Vb) an den Klemmen der Batterie (1) außerhalb einer Betätigung des Stellgliedes (2) durchgeführt wird.

3. Verfahren gemäß einem der Ansprüche 1 und 2, dadurch gekennzeicluret, dass es eine kritische Betriebsart (Mc) aufweist, die mit einer zweiten Spannungsschwelle (V₂) in Abhängigkeit der Temperatur verbunden ist und die unter der ersten Spannungsschwelle (V₁) liegt, wobei sich das autonome System in der verminderten Betriebsart (Md) befindet, wenn die gemessene Spannung (Vb) zwischen der ersten Spannungsschwelle (V₁) und der zweiten Spannungsschwelle (V₂) liegt, und in einer kritischen Betriebsart (Mc) befindet, wenn die gemessene Spannung (Vb) unter der zweiten Spannungsschwelle (V₂) liegt, wobei der von der Batterie (1) gelieferte Strom während des Übergangs von der verminderten Betriebsart (Md) in die kritische Betriebsart (Mc) verringert wird.

4. Verfahren gemäß Anspruch 2, **dadurch gekennzeichnet, dass** es eine Betriebsspannungsschwelle (Vf) umfasst, die über einem vom Batteriehersteller gelieferten Wert und unter der ersten Spannungsschwelle (V₁) liegt, wobei das autonome System unter dieser Betriebsspannungsschwelle (Vf) nur die Steuerung des Wiederaufladens der Batterie (1) sicherstellt.

5. Verfahren gemäß Anspruch 3, **dadurch gekennzeichnet, dass** es eine Betriebsspannungsschwelle (Vf) umfasst, die über einem vom Batteriehersteller gelieferten Wert und unter der zweiten Spannungsschwelle (V₂) liegt, wobei das autonome System unter dieser Betriebsspannungsschwelle (Vf) nur die Steuerung des Wiederaufladens der Batterie (1) sicherstellt.

6. Verfahren gemäß einem der Ansprüche 1 bis 5, **dadurch gekennzeichnet, dass** es einen minimalen Temperaturwert (Tmin) aufweist, unter welchem die Verwendung des autonomen Systems untersagt ist.

7. Verfahren gemäß einem der Ansprüche 1 bis 6, **dadurch gekennzeichnet, dass** es einen maximalen Temperaturwert (Tmax) aufweist, über welchem die Verwendung des autonomen Systems untersagt ist.

## Claims

1. Method for using a stand-alone system comprising an actuator (2) connected to a battery (1), **characterized in that** during a discharging phase of the battery (1), the method comprises at least one normal operating mode (Mn) for the system and one deteriorated operating mode (Md) for the system, the method comprising the following steps:
- the measurement of a temperature (Tb) representative of the battery temperature,
- the determination of a first voltage threshold (V₁) depending upon the measured temperature (T_{b}),
- the measurement of a voltage (V_{b}) at the battery terminals,
- the determination of the operating mode (Mn, Md), said stand-alone system being in the normal operating mode (Mn) when the measured voltage (Vb) is higher than the first voltage threshold (V₁ and in the deteriorated operating mode (Md) when the measured voltage (Vb) is lower than the first voltage threshold (V₁), the current provided by the battery (1) during an actuation being reduced when going from the normal mode (Mn) to the deteriorated mode (Md).

2. Method according to claim 1, **characterized in that** the measurement of the voltage (Vb) at the terminals of the battery (1) is carried out when the actuator (2) is not actuated.

3. Method according to anyone of the claims 1 and 2, **characterized in that** it comprises a critical operating mode (Mc) associated with a second voltage threshold (V₂), function of the temperature, and lower than the first voltage threshold (V₁), the stand-alone system being in the deteriorated operating mode (Md) when the measured voltage (Vb) is comprised between the first voltage threshold (V₁) and the second voltage threshold (V₂), and in the critical mode (Mc) when the measured voltage (V_{b}) is lower than the second voltage threshold (V₂), the current provided by the battery (1) being reduced when going from the deteriorated mode (Md) to the critical mode (Mc).

4. Method according to claim 2, **characterized in that** it comprises an operating voltage threshold (V_{f}), higher than a value provided by the manufacturer of the battery, and lower than the first voltage threshold (V₁), below of said operating voltage threshold (Vf) the stand-alone system provides only the control of the recharging of the battery (1).

5. Method according to claim 3, **characterized in that** it comprises an operating voltage threshold (V_{f}), higher than a value provided by the manufacturer of the battery, and lower than the second voltage threshold (V2), below of said operating voltage threshold (V_{f}) the stand-alone system provides only the control of the recharging of the battery (1).

6. Method according to anyone of the claims 1 to 5, **characterized in that** it comprises a minimum value of temperature (Tmin) below which the use of the stand-alone system is prohibited

7. Method according to anyone of the claims 1 to 6, **characterized in that** it comprises a maximum value of temperature (Tmax) above which the use of the stand-alone system is prohibited.
